(19) Europäisches Patentamt / European Patent Office / Office européen des brevets

(11) **EP 3 300 324 A1**

(12) **EUROPEAN PATENT APPLICATION**

(43) Date of publication:
**28.03.2018 Bulletin 2018/13**

(51) Int Cl.:
*H04L 27/26* (2006.01)

(21) Application number: **16190380.2**

(22) Date of filing: **23.09.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **NTT DOCOMO, INC.**
**Chiyoda-ku**
**Tokyo 100-6150 (JP)**

(72) Inventors:
• **Kusume, Katsutoshi**
  **80687 Munich (DE)**

• **Iwamura, Mikio**
  **80687 Munich (DE)**
• **Bazzi, Jamal**
  **80687 Munich (DE)**
• **Weitkemper, Petra**
  **80687 Munich (DE)**
• **Takeda, Kazuki**
  **Tokyo, 100-6150 (JP)**
• **Takeda, Kazuaki**
  **Tokyo, 100-6150 (JP)**
• **Nagata, Satoshi**
  **Tokyo, 100-6150 (JP)**

(74) Representative: **Betten & Resch**
**Patent- und Rechtsanwälte PartGmbB**
**Maximiliansplatz 14**
**80333 München (DE)**

(54) **TRANSMITTING OFDM RESOURCE BLOCKS WITH DIFFERENT SUBCARRIER SPACING**

(57) A method for transmitting a multicarrier signal over frequency resource, wherein said frequency resource is divided into a plurality of resource blocks, said resource block comprises of a number of subcarriers that are equally spaced by a subcarrier spacing, said number of subcarriers or said subcarrier spacing is configurable per said resource block or per a contiguous set of resource blocks, said subcarrier spacing $f_n$ is $2^n$ times the smallest configurable subcarrier spacing $f_0$ with non-negative integer n, the first subcarrier of said subcarrier spacing $f_n$ is shifted by an offset value with respect to the first subcarrier of subcarrier spacing $f_0$, and said offset value is dependent on n.

Fig.1

EP 3 300 324 A1

**Description**

**Field of the invention**

The present invention is directed to a method and apparatus for transmitting a multicarrier signal.

**Background of the invention**

Orthogonal Frequency Division Multiplexing, OFDM, shows desirable properties in a multiuser scenario as long as all parameters like subcarrier, hereinafter also referred to as SC, spacing and symbol duration are constant in the system. In a future system it is expected that the numerology may be optimized for each frequency resource for serving certain service type. That is because only one fixed numerology may not be efficient to support diverse kinds of applications with different requirements. The term numerology in the following refers especially to the spacing between the subcarriers, but also it can refer to the symbol duration. For example, a wider SC spacing may be more suitable for combating higher Doppler shift in high mobility scenario than in low mobility scenario.

In such cases where different numerologies are supported within one system band, OFDM is no longer orthogonal and the high out-of-band emission, OOBE, introduces significant interference to the neighboring resources in the frequency domain. A so-called guard band between the users can reduce the interference, but due to the spectrum of OFDM a large amount of guard band would be needed leading to dramatically reduced spectral efficiency.

Therefore, some OFDM-based waveforms are considered as promising candidate waveforms for new radio that apply additional signal processing such as filtering or windowing in order to lower the OOBE and thus lower the interference to neighboring resources.

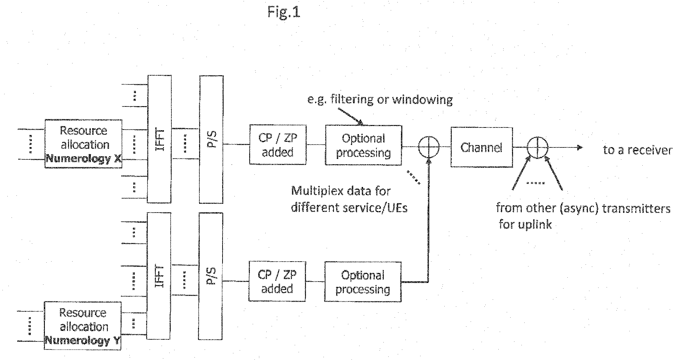

Figure 1 shows a schematic overview of OFDM-based waveform in a transmitter where resource allocation for different users and/or different services is performed in the frequency domain. In case of uplink transmission signals transmitted from multiple (possibly asynchronous) transmitters are received by a receiver. Different numerologies such as SC spacing may be used for different subbands.

We consider that SC spacing $f_n$ is defined to be $2^n$ times the smallest configurable SC spacing $f_0$ with non-negative integer n, i.e. $f_n = 2^n f_0$. This means that $f_0$ is the smallest SC spacing and $f_1 = 2f_0$, $f_2 = 2f_1$, ..., $f_n = 2f_{n-1}$, and so on. This results in that the least common multiple, LCM, of all the SC spacings is the largest SC spacing, and the greatest common divisor, GCD, of all the SC spacing is the smallest SC spacing. This ensures that all the SC center frequencies can be placed, if properly placed, on the smallest SC grid.

We also consider that physical source block, PRB, which is the smallest scheduling unit, comprises of the same number of subcarriers for all numerologies. Examples of the number of subcarriers per PRB are 12, 16, and other values are also possible. With this and also with the SC spacing definition $f_n = 2^n f_0$, PRBs among all numerologies have nested relations. Thus, nesting means k consecutive PRBs for SC spacing $f_0$ cover the same frequency range as k/2 consecutive PRBs for SC spacing $f_1$, the same frequency range as k/4 consecutive PRBs for SC spacing $f_2$, etc.

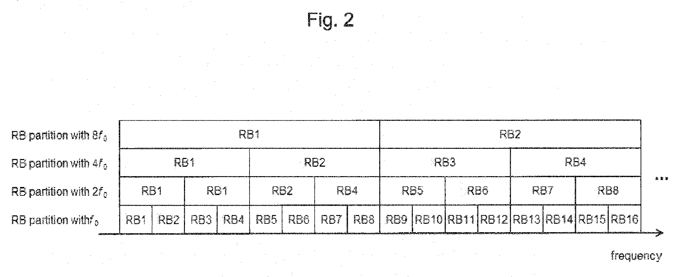

Figure 2 illustrates an example of the nested relations of PRBs among different numerologies. In such a resource space, multiple numerologies may, for example, be time-domain or frequency-domain multiplexed and PRBs for different numerologies may be located on a fixed grid relative to each other. As the number of subcarriers per PRB is kept constant for all numerologies, the PRB bandwidth is scaled with the SC spacing, e.g., when SC spacing is doubled, so is the PRB bandwidth. This results in the nested relations.

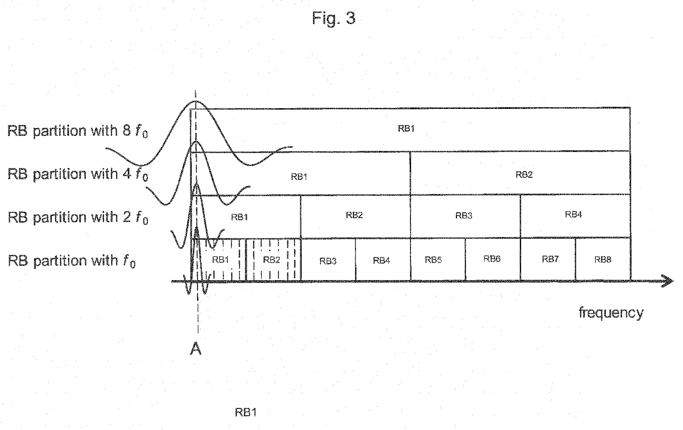

Figure 3 illustrates an approach to place the SCs for different SC spacings from $f_0$ up to $8f_0$ based on Figure 2. In Figure 3, the number of subcarriers for PRBs at SC spacing $f_0$ is 6 for illustration. The resource grid for the SC spacing $f_0$ are partly indicated by the dashed vertical lines; for example, the leftmost vertical line labelled A indicates the SC center frequency of the lowest frequency within RB1 for the SC spacing $f_0$. Figure 3 illustrates that SC center frequency corresponding to the lowest frequency within RB1 for all the SC spacings, i.e. numerologies, is located exactly on the same frequency as for the SC spacing $f_0$.

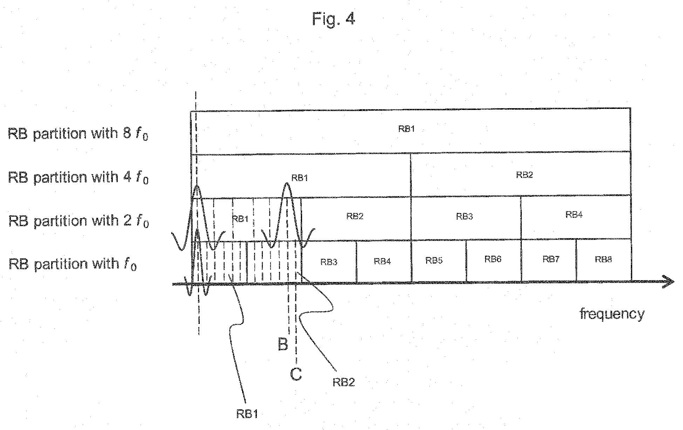

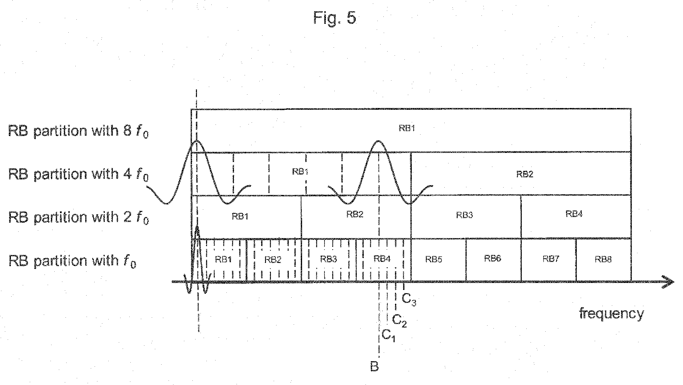

While the approach in Figure 3 is straightforward, it has the following drawback that is illustrated in Figure 4 and Figure 5. Figure 4 shows at the right hand side of RB1 for the SC spacing $2f_0$, the rightmost SC is mapped on the second last resource grid, labelled B, of the SC spacing $f_0$, instead of the last grid, labelled C, because only every other resource grid carries active SC for the SC spacing $2f_0$. In mathematical terms, the reason for the left bias is that some multiples of 6 (right edge of a basic PRB in the example) are not multiples of 2n (position of subcarriers of straight-forward SC spacing for PRBs at SC spacing $f_n$). Consequently, potential interference caused by RB1 for the SC spacing $2f_0$ to neighbor PRBs, such as RB3 for the SC spacing $f_0$, are slightly biased to the left or towards the lower frequency. In the figure, neighbor relationship relates, for example, to the frequency domain. This bias tendency is even more pronounced for the wider SC spacing, which is illustrated in Figure 5. Figure 5 shows that the rightmost SC for the SC spacing $4f_0$ is mapped on the resource grid labelled B, which is biased to the left, i.e. towards lower frequencies in view of the resource grids $C_1$, $C_2$, $C_3$ of RB4 for the SC spacing $f_0$.

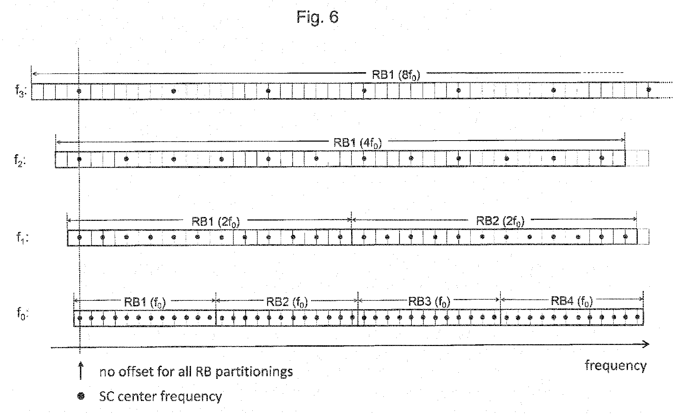

Figure 6 illustrates the same mapping of the SC center frequencies in Figures 3 to 5, but in another representation, where each circle represents the location of an active SC. The scenario in Figure 6 assumes that there are 12 subcarriers per PRBs at SC spacing $f_0$. Figure 6 shows that the interference to neighbor PRBs are strongly biased to the left.

The present invention intends to overcome the drawback of the prior art.

**Summary of the invention**

According to one embodiment there is provided a method for transmitting a multicarrier signal over a frequency resource, wherein

a) said frequency resource is divided into a plurality of resource blocks,
b) said resource block comprises of a number of subcarriers that are equally spaced by a subcarrier spacing,
c) said number of subcarriers or said subcarrier spacing is configurable per said resource block or per a contiguous set of resource blocks,
d) said subcarrier spacing $f_n$ is $2^n$ times the smallest configurable subcarrier spacing $f_0$ with non-negative integer n,
e) the first subcarrier of said subcarrier spacing $f_n$ is shifted by an offset value with respect to the first subcarrier of subcarrier spacing $f_0$, and
f) said offset value is dependent on *n.*

This transmission method has the advantage that transmission can occur in resource blocks with mixed numerologies, e.g. different subcarrier spacings of resource blocks, so that diverse requirements can be met, e.g. to combat various inter carrier interferences, ICIs, with different mobility. Thereby the subcarrier centers within each resource block may be shifted by an offset, so as to control interference among subcarriers in neighboring physical resource blocks.

According to one embodiment, said offset value for said subcarrier spacing $f_n$ is one of the following: $f_n/ 2$ for n > 0, $(f_n - f_0) / 2$, $(f_n - f_0) / 2$ for n > 0 and $f_0/ 2$ for n=0, or $f_n/2 - f_0$ for n > 0.

This has the effect that the position of centers of subcarriers within a physical resource block may be shifted in such a manner that interference at the high end or the low end of the frequency spectrum of a resource block with neighboring resource blocks in the frequency spectrum can be reduced or avoided. Overall, a more balanced interference to neighboring resource blocks at lower and high frequencies may be achieved compared to the case, where subcarrier centers are not shifted. Hence unbiased interference over the entire resource grid space results, which in turn improves the block error rate and thus overall transmission efficiency.

According to one embodiment subcarrier center frequencies of subcarrier spacing $f_n$ and subcarrier center frequencies of subcarrier spacing $f_{n+1}$ are shifted by integer multiples of $f_n$.

This has the advantage that the center frequencies of subcarriers occur only at specific positions inside physical resource blocks so that receiver side processing is facilitated and simplified for different numerologies.

According to one embodiment said offset value for said subcarrier spacing $f_n$ is configurable for each n.

This has the advantage that different numerologies may have different offsets of subcarrier centers, which means a higher flexibility in configuring the signal using a relatively simple configuration. The effect of avoiding undesired interference between carriers that are assigned to neighboring resource blocks can be further improved, especially if numerologies of neighboring resource blocks are known before configuring the respective offsets.

According to one embodiment said configurable offset value for said subcarrier spacing $f_n$ is chosen from a pre-defined set of values for each *n.*

This has the advantage that the configuration of offset may be common among multiple transmitters and receivers.

According to one embodiment said configurable offset value for said subcarrier spacing $f_n$ is signaled from network to user equipment semi-statically or dynamically.

This has the effect that the offsets can be configured under consideration of information about users, transmissions, and resource allocations that is only available in the network.

According to one embodiment

a) said transmitted signal in each slot is described by one or several resource grids of $N_{RB} N_{sc}^{RB}$ subcarriers and $N_{symb}$ symbols, where $N_{sc}^{RB}$ denotes the number of subcarriers per resource block and $N_{RB}$ is the number of resource blocks for subcarrier spacing $f_0$,

b) each element in said resource grid is called resource element and is uniquely identified by the index pair (*k,l*) where $k = 0,..., N_{RB} N_{sc}^{RB} - 1$ and *l* = 0,..., $N_{symb}$ -1 are the indices in the frequency and time domains, respectively, and

c) each resource element for subcarrier spacing $f_n$ for $n > 0$ is uniquely identified by the index pair $(k',l)$ where the index $k'$ on said resource grid $k$ is defined as $k = 2^n k' + g_n$ with offset value $g_n$ that is dependent on $n$.

This has the effect that the structure of the resource space including resource elements for different subcarrier spacings may be specified in a manner that enables their configuration, in particular different numerologies, and the configuration of offset values. The method is applicable to any waveform and any reference signal design that may be configured using the above aspects for defining the slot structure and physical resource elements.

According to one embodiment, said offset value for said subcarrier spacing $f_n$ is one of the following:

$$g_n = 2^{n-1} \text{ for } n > 0 \text{ or } g_n = 2^{n-1} - 1 \text{ for } n > 0.$$

This has the effect that the position of centers of subcarriers within a physical resource block may be shifted in such a manner that interference at the high end or the low end of the frequency spectrum of a resource block with neighboring resource blocks in the frequency spectrum can be reduced or avoided. Furthermore, the offset value can be represented and configured in an efficient manner.

According to another embodiment there is provided an apparatus for transmitting a multicarrier signal over a frequency resource, wherein

a) said frequency resource is divided into a plurality of resource blocks,
b) said resource block comprises of a number of subcarriers that are equally spaced by a subcarrier spacing,
c) said number of subcarriers or said subcarrier spacing is configurable per said resource block or per a contiguous set of resource blocks,
d) said subcarrier spacing $f_n$ is $2^n$ times the smallest configurable subcarrier spacing $f_0$ with non-negative integer n,
e) the first subcarrier of said subcarrier spacing $f_n$ is shifted by an offset value with respect to the first subcarrier of subcarrier spacing $f_0$, and
f) said offset value is dependent on $n$.

This enables an implementation of an apparatus for transmitting a signal having the advantages of an embodiment of the invention

According to one embodiment the apparatus further comprises a module for performing the steps as defined in one of the embodiments of the invention.

According to another embodiment there is provided a multicarrier signal to be transmitted over a frequency resource, wherein

a) said frequency resource is divided into a plurality of resource blocks,
b) said resource block comprises of a number of subcarriers that are equally spaced by a subcarrier spacing,
c) said number of subcarriers or said subcarrier spacing is configurable per said resource block or per a contiguous set of resource blocks,
d) said subcarrier spacing $f_n$ is $2^n$ times the smallest configurable subcarrier spacing $f_0$ with non-negative integer n,
e) the first subcarrier of said subcarrier spacing $f_n$ is shifted by an offset value with respect to the first subcarrier of subcarrier spacing $f_0$, and said offset value is dependent on $n$.

Such a signal achieves the advantages with respect to a controlling interference among neighboring subcarriers that have been described for the above embodiments of the invention.

**Description of the drawings**

Figure 1 shows a schematic overview of OFDM-based waveform in a transmitter.

Figure 2 illustrates an example of the nested relations of PRBs among different SC spacings.

Figures 3, 4, and 5 illustrate an example of placing the SCs for different SC spacings without offset values.

Figure 6 illustrates the same mapping of the SC center frequencies in Figure 3 in another representation.

Figure 7 shows an example offset value $(f_n - f_0)/2$.

Figure 8 shows an example offset value $f_n/2$ for $n > 0$.

Figure 9 shows an example offset value $f_n/2 - f_0$ for $n > 0$.

Figure 10 shows an example offset value $(f_n - f_0)/2$ for $n > 0$, and $f_0/2$ for $n=0$.

Figure 11 illustrates the nested mapping of SC center frequencies.

Figure 12 illustrates an example of $2f_0$ offset for SC spacing of $4f_0$.

Figure 13 shows an example of $f_0$ offset for SC spacing of $2f_0$ and $4f_0$.

Figure 14 introduces $2f_0$ offset value for the SC spacing of $4f_0$ and $8f_0$.

Figure 15 illustrates the right end of the spectrum (high frequency) for $8f_0$ and $f_0$ for the same scenario as Figure 14, showing the mirror offset for $8f_0$.

Figure 16 shows an offset value of $4f_0$ for the SC spacing of $8f_0$.

Figure 17 and Figure 18 are the mirrored versions of Figures 14 (also 15) and 16, respectively.

Figure 19 shows a resource grid with resource elements.

Figure 20 shows discrete domain indices of the reference numerology.

**Detailed description**

At first, some terms used in the description will be defined in the following list of abbreviations.

BLER    block error rate
FFT     fast Fourier transform
GCD     greatest common divisor
ICI     inter-carrier interference
LCM     least common multiple
OFDM    orthogonal frequency division multiplexing
PRB     physical resource block
RE      resource element
SC      subcarrier

As has been explained before, in the prior art approach there is drawback in terms of biased interference to neighbor RBs.
According to one embodiment, it is proposed to introduce frequency offset for each SC spacing such that the first subcarrier, i.e. the SC having the lowest center frequency among the SCs in the same PRB, of said SC spacing $f_n$ is shifted by an offset value with respect to the first subcarrier of SC spacing $f_0$.

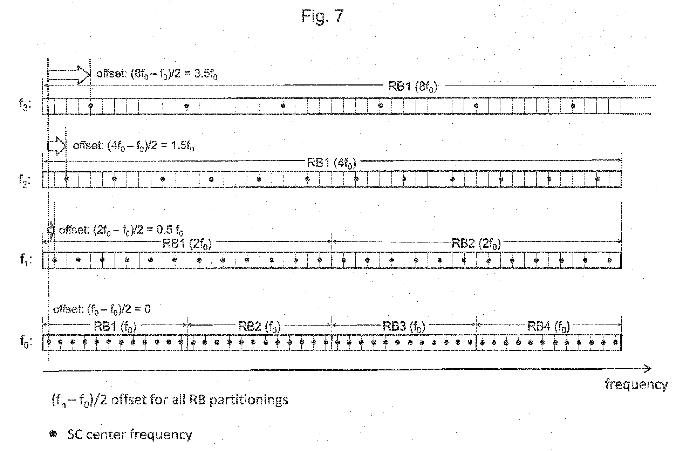

Figure 7 shows an example offset value $(f_n - f_0)/2$ for each SC spacing $f_n$. In this way all the subcarriers within each PRB for all the SC spacing are located symmetrically, which means that a subcarrier center in the SC spacing $f_{n+1}$ has a frequency that lies in the middle between the respective subcarrier centers of subcarriers in the SC spacing $f_n$ That completely avoids unequal interference situations to neighbor PRBs and balanced BLER performance in neighbor PRBs can be expected. One possible shortcoming of this approach is, however, that the SC center frequencies for the SC spacing for $n > 0$ are misaligned, as shown in shown in Figure 7, by $f_0/2$ with respect to the resource grid of the base subcarrier spacing $f_0$. Such misalignment may lead to higher complexity and possible inefficiency in the receiver side processing. In order to efficiently perform receiver processing by only one fast Fourier transform, FFT, instead of multiple FFTs for different SC spacings, a higher oversampling factor (doubling the sampling rate for the base subcarrier spacing $f_0$) may be necessary that could lead to higher complexity. Hence aligned SC center frequencies at different SC spacings are desirable if efficient receiver side-processing is desired.

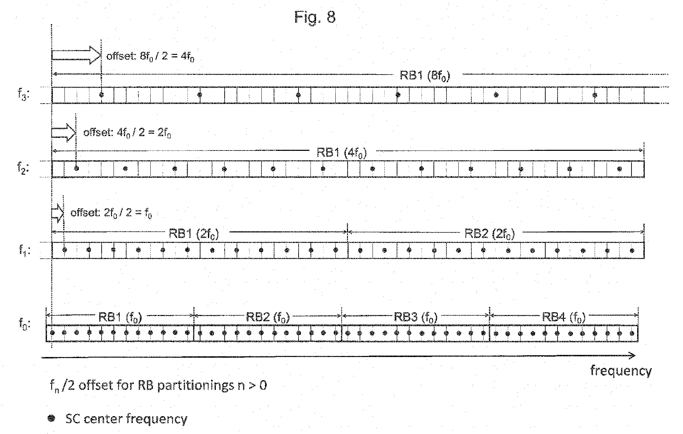

Figure 8 shows another example of offset value $f_n/2$ for $n > 0$. In this case all the SCs for SC spacing n > 0 are slightly biased to the higher frequency. In contrast to Figure 7, the SC center frequencies for all the SC spacings are aligned with the resource grid of the base subcarrier spacing $f_0$ that has an advantage of efficient receiver processing.

The remaining embodiments below assume that the SC center frequencies for all the SC spacings are aligned to the resource grid of the base subcarrier spacing $f_0$.

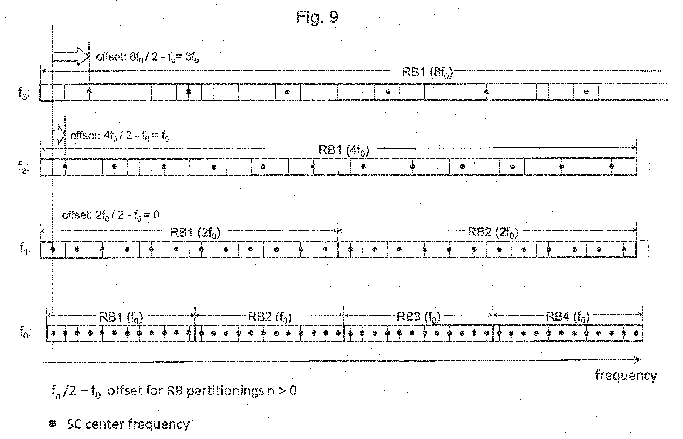

Figure 9 shows a further example of offset value $f_n/2 - f_0$ for $n > 0$. This is simply a shifted version of Figure 8 where all the SCs for SC spacing $n > 0$ are slightly biased to the lower frequency. The amount of the shift with respect to Figure 8 is equal to the base SC spacing $f_0$.

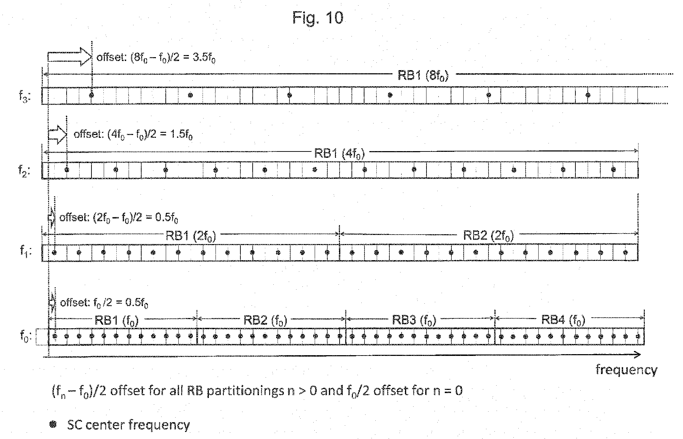

Figure 10 shows yet another example of offset value $(f_n - f_0)/2$ for $n > 0$, and $f_0/2$ for $n=0$. In this case only the SCs for the base SC spacing $f_0$ are slightly biased to the higher frequency. In this case, also the $f_0$ subcarriers are shifted, namely by offset $f_0/2$. Such a shift of the baseline SC locations may not be desired for compatibility reasons so that other embodiments which are also presented herein do not shift the baseline SC locations, i.e. the SC spacing $f_0$.

In the following we introduce a specific nesting condition on the alignment of center frequencies for all the SC spacings.

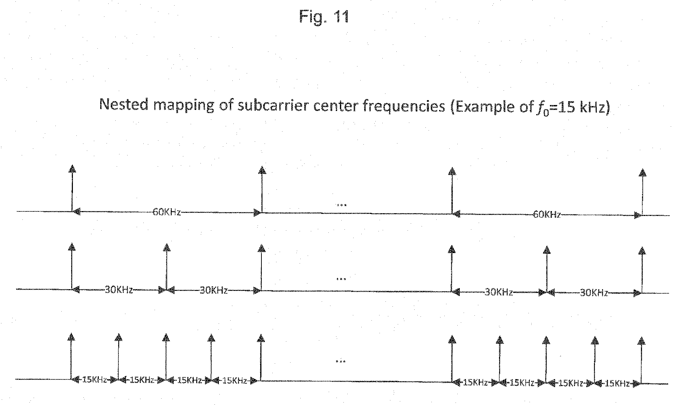

Figure 11 illustrates the nested mapping of SC center frequencies, i.e., subcarriers are mapped on the subset/superset of those for subcarrier spacing of the base SC spacing $f_0$ in the nested manner in the frequency domain. In other words SC center frequencies of SC spacing $f_n$ and SC center frequencies of SC spacing $f_{n+1}$ are shifted by integer multiples of $f_n$.

According to one embodiment, offset values for SC spacing $f_n$ is selected to balance the interference to the left and right hand sides while satisfying the nested mapping of SC center frequencies for all the SC spacings.

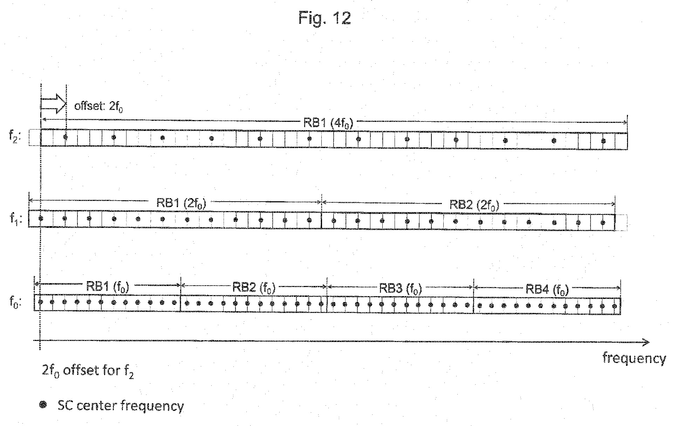

Figure 12 illustrates an example of $2f_0$ offset value for SC spacing of $4f_0$ when SC spacing up to $4f_0$ are supported in one system band. In contrast to no offset at all, which is shown in Figure 6, interference to the left and right neighbor PRBs are more balanced while satisfying the nested SC center frequencies for all the SC spacings.

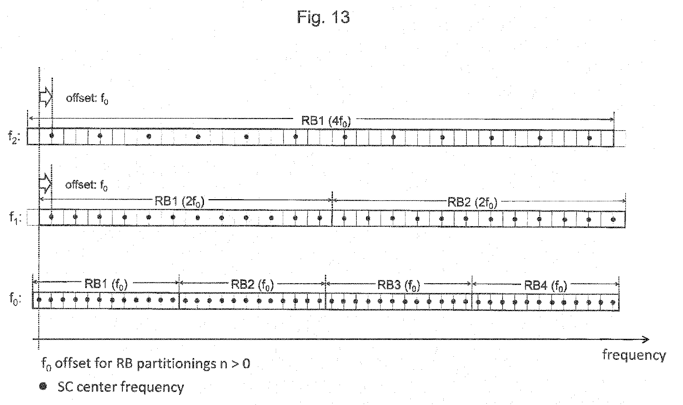

Figure 13 shows another example of $f_0$ offset value for SC spacing of $2f_0$ and $4f_0$ when SC spacing up to $4f_0$ are supported in one system band. This is simply a mirrored version of Figure 12. In this context, mirroring means that the locations of center frequencies of active SCs in Figure 13, when mirrored on the frequency axis, corresponds to locations of center frequencies of active SCs in Figure 12. Thus, if some bias towards lower frequencies exists in Figure 12, then correspondingly some bias towards higher frequencies would exist in Figure 13.

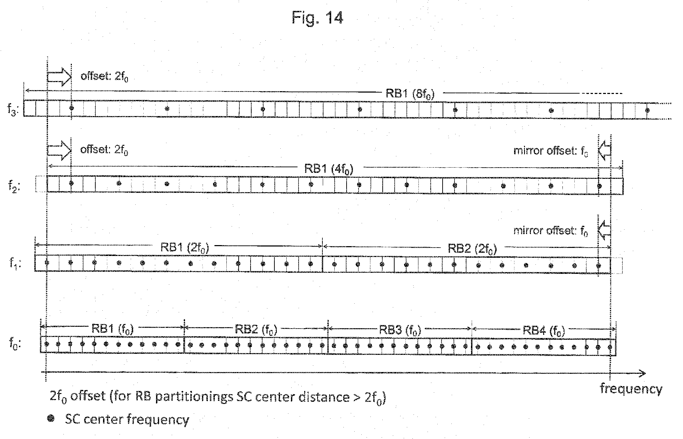

Figure 14, 15, 16, and 17 illustrate several offset values when SC spacing up to $8f_0$ are supported in one system band.

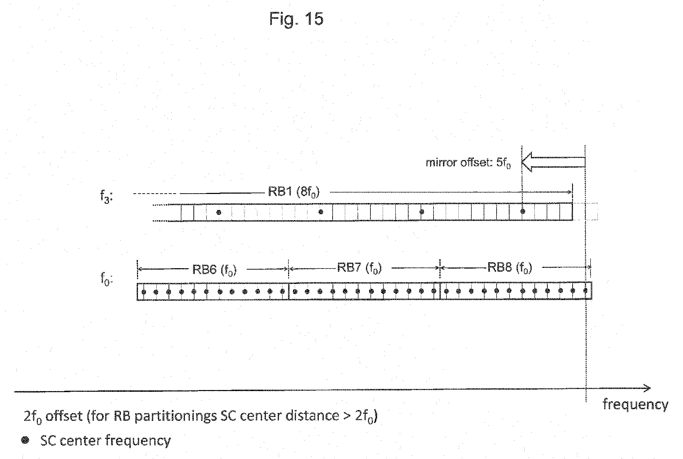

Figure 14 introduces $2f_0$ offset value for the SC spacing of $4f_0$ and $8f_0$. When compared to the case of no offset values in Figures 4, 5, and 6, a more balanced interference situation is realized. The details of the high end of the frequency spectrum for the $8f_0$ SC spacing are not shown in Figure 14 but are instead shown and detailed in Figure 15, where only the $f_0$ SC spacing and the $8f_0$ SC spacing are shown. Besides the offset, also a mirror offset for each SC spacing $f_n$ can be determined as shown in Figure 14. In this scenario, the mirror offset is the distance between the last subcarrier center (highest frequency) in the $f_n$ SC spacing and the last subcarrier center (highest frequency) in the last physical resource block of the $f_0$ SC spacing that is nested in the frequency range of the PRB at spacing $f_n$. This distance can be determined based on integer/modulo arithmetic, the baseline subcarrier bandwidth $f_0$, and the number of subcarriers per resource block. Thus, when mirroring a scenario, the mirror offset becomes the offset and vice versa.

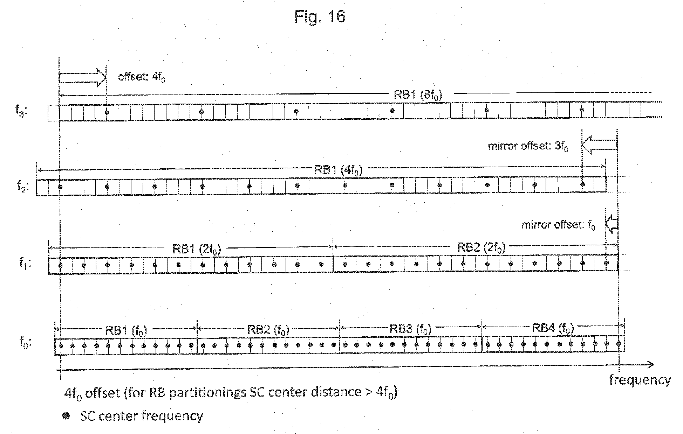

Figure 16 shows another offset value of $4f_0$ for the SC spacing of $8f_0$ while no offset for other SC spacing. As compared to Figure 14, the interference by the SC spacing $4f_0$ is more biased, but more balanced interference is achieved for the SC spacing $8f_0$. Considering that interference to neighbor PRBs is stronger with wider SC spacing, e.g., by referring to Figures 4 and 5, the offset values in Figure 16 may lead to less critical interference than in Figure 14. There is no separate illustration showing the high end of the of the frequency spectrum for the $8f_0$ SC spacing in the scenario of Figure 16, however the mirror offset for the $8f_0$ SC spacing for this scenario can be obtained, correspondingly to the illustration in Figure 15 for the scenario of Figure 14 and as has been described above.

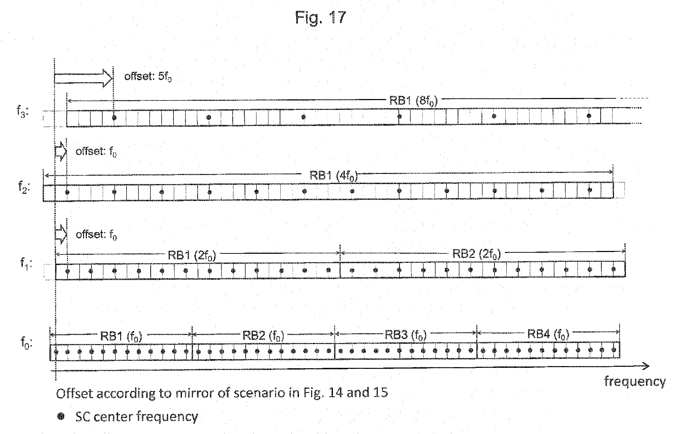

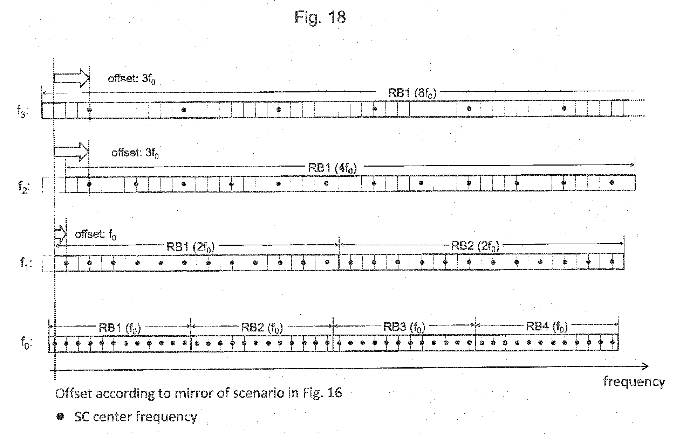

Figure 17 and Figure 18 are mirrored versions of the scenarios shown in Figure 14 and Figure 16, respectively.

According to one embodiment, offset value for SC spacing $f_n$ is configurable for each n and the configurable offset value is signaled from network to user equipment semi-statically or dynamically. This has the advantage that the network can choose an appropriate offset value by flexibly adapting to the resource usage. Thereby, offset values and their computations, according to the above, may be different for different users and/or different services.

As an example, if there is already allocated resource on the left (lower frequency) or right side (higher frequency) of certain PRB or contiguous PRBs, network can choose and signal offset values for the PRB or contiguous PRBs that result in less interference on that side where resource is already allocated. An extreme example is that no offset value as in Figures 4, 5, and 6 can be chosen if there is already allocated resource for a certain user or service on the right hand side (higher frequency), but not on the left hand side (lower frequency). On the other hand, if there is already an allocated resource on the left hand side (lower frequency), but not on the right hand side (higher frequency), non-zero offset values that results in strongly biased interference to the right (higher frequency) can be chosen as a more appropriate choice than no offset value as in Figures 4, 5, and 6.

According to one embodiment, the configurable offset value for SC spacing $f_n$ is chosen from pre-defined set of values for each n. Quantized indices can be defined for the pre-defined set and can be utilized for efficient signaling.

So far, the offset values for different numerologies have been defined in terms of $f_0$ or $f_n$. In the following, alternative ways of expressing and specifying the offset value for different numerologies are described.

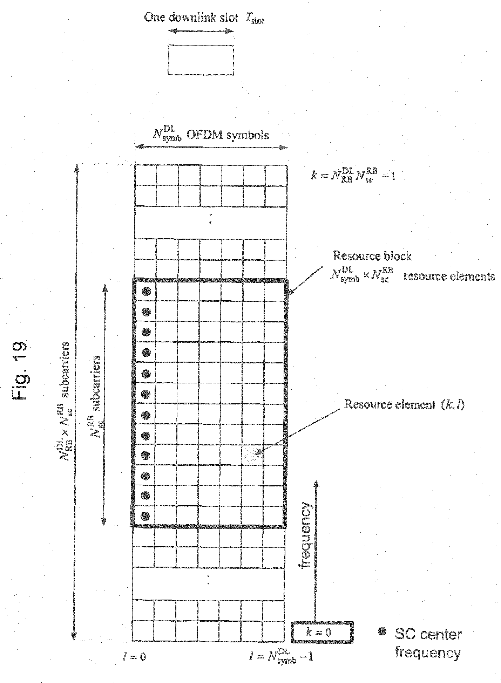

According to one embodiment, offset values can be defined based on resource grids for SC spacing $f_0$. An example of such a resource grid is shown in Figure 19. More specifically, a multicarrier signal to be transmitted in a certain time slot is described by one or several resource grids of $N_{RB} N_{sc}^{RB}$ SCs and $N_{symb}$ symbols, where $N_{sc}^{RB}$ denotes the number of SCs per physical resource block and $N_{RB}$ is the number of PRBs for SC spacing $f_0$. Each element in the resource grid is called resource element, RE, and is uniquely identified by the index pair (k,l) where $k = 0, ..., N_{RB} N_{sc}^{RB} - 1$ and $l$ = 0,...,$N_{symb}$ - 1 are the indices in the frequency and time domains, respectively.

For different SC spacings $f_n$ for $n > 0$, the frequency domain index k is refined to index k' so that each RE in the resource grid with SC spacing $f_n$ is uniquely identified by the index pair (k',l) where the index $k'$ on the resource grid $k$, which is the index of the reference numerology, is defined as $k = 2^n k' + g_n$ with offset value $g_n$ that is dependent on $n$.

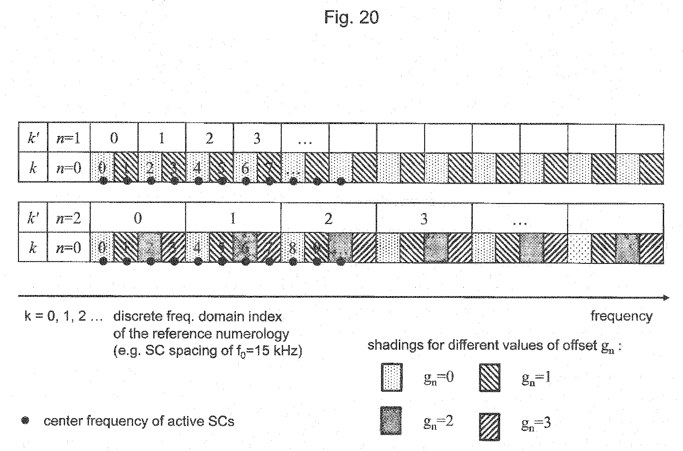

Figure 20 illustrates the relation between k and k' for the numerologies n=1 and n=2. In a first example, such offset values $g_n$ are $g_n = 2^{n-1}$ for $n > 0$, which results in $g_n$=1 and $g_n$=2 for n=1 and n=2 respectively. The positions of the SC center frequencies for these two cases are illustrated with different shadings in the Figure 20. It can be obtained from Figure 20 that the scenario for this first example is the same, i.e. same positions of SC center frequencies, as the one shown in Figure 8, where the offset has been specified in terms of $f_n$ as $f_n$/2 for n>0.

In a second example, an alternative spacing of SC center frequencies is given for the offset value $g_n = 2^{n-1} - 1$ for $n > 0$. This results in $g_n$=0 and $g_n$=1 for n=1 and n=2 respectively, wherein the positions of the SC centers for these two cases are illustrated with different shadings in the Figure 20. It can be obtained from Figure 20 that the scenario for this second example is the same, i.e. same positions of SC center frequencies, as the one shown in Figure 9, where the offset has been specified in terms of $f_n$ as $f_n$/2 - $f_0$ for n>0.

The specification of offset values expressed in frequency domain indices $g_n$ instead of smallest configurable subcarrier spacing $f_0$ has been demonstrated for the scenarios of Figure 8 and 9. Likewise, for other scenarios show herein, the offsets of different RB paritionings can be expressed in the framework of indices in the frequency domain of a resource grid as described above in Figure 19 and exemplified in Figure 20.

The present invention has been described by adopting terminology and concepts from the LTE design. It should be clear to skilled person that the present invention can be applied to any multicarrier signal design with mixed numerologies. The present invention can be applicable for different link types, such as downlink, uplink, sidelink, etc.

The skilled person will readily recognize that embodiments of the invention may be implemented by software or hardware or by a combination of both. As far as an apparatus or a module according to embodiments of the invention is concerned, the skilled person will recognize that they can be implemented by a microprocessor, e.g. a digital signal processor, controlled by a suitably programmed computer program.

**Claims**

**1.** A method for transmitting a multicarrier signal over a frequency resource, wherein

g) said frequency resource is divided into a plurality of resource blocks,
h) said resource block comprises of a number of subcarriers that are equally spaced by a subcarrier spacing,
i) said number of subcarriers or said subcarrier spacing is configurable per said resource block or per a contiguous set of resource blocks,
j) said subcarrier spacing $f_n$ is $2^n$ times the smallest configurable subcarrier spacing $f_0$ with non-negative integer $n$,
k) the first subcarrier of said subcarrier spacing $f_n$ is shifted by an offset value with respect to the first subcarrier of subcarrier spacing $f_0$, and l) said offset value is dependent on $n$.

**2.** The method of claim 1, wherein

said offset value for said subcarrier spacing $f_n$ is one of the following:

$$f_n/2 \text{ for } n > 0,$$

$$(f_n - f_0)/2,$$

$$(f_n - f_0)/2 \text{ for } n > 0 \text{ and } f_0/2 \text{ for } n=0, \text{ or}$$

$$f_n/2 - f_0 \text{ for } n > 0.$$

**3.** The method of claim 1, wherein

subcarrier center frequencies of subcarrier spacing $f_n$ and subcarrier center frequencies of subcarrier spacing $f_{n+1}$ are shifted by integer multiples of $f_n$.

**4.** The method of one of the preceding claims,

said offset value for said subcarrier spacing $f_n$ is configurable for each n.

**5.** The method of claim 4,

said configurable offset value for said subcarrier spacing $f_n$ is chosen from a pre-defined set of values for each $n$.

**6.** The method of claims 4 or 5,

said configurable offset value for said subcarrier spacing $f_n$ is signaled from network to user equipment semi-statically or dynamically.

**7.** The method of one of the preceding claims, wherein

d) said transmitted signal in each slot is described by one or several resource grids of $N_{RB} N_{sc}^{RB}$ subcarriers and $N_{symb}$ symbols, where $N_{sc}^{RE}$ denotes the number of subcarriers per resource block and $N_{RB}$ is the number of resource blocks for subcarrier spacing $f_0$,

e) each element in said resource grid is called resource element and is uniquely identified by the index pair ($k,l$) where $k = 0,..., N_{RB} N_{sc}^{RB} - 1$ and $l = 0,...,N_{symb}$ -1 are indices in frequency and time domains, respectively, and

f) each resource element for subcarrier spacing $f_n$ for $n > 0$ is uniquely identified by the index pair ($k',l$) where the index $k'$ on said resource grid $k$ is defined as $k = 2^n k' + g_n$ with offset value $g_n$ that is dependent on $n$.

**8.** The method of claim 7, wherein

said offset value for said subcarrier spacing $f_n$ is one of the following:

$$g_n = 2^{n-1} \text{ for } n > 0 \text{ or } g_n = 2^{n-1} - 1 \text{ for } n > 0.$$

**9.** An apparatus for transmitting a multicarrier signal over a frequency resource, wherein

g) said frequency resource is divided into a plurality of resource blocks,

h) said resource block comprises of a number of subcarriers that are equally spaced by a subcarrier spacing,

i) said number of subcarriers or said subcarrier spacing is configurable per said resource block or per a contiguous set of resource blocks,

j) said subcarrier spacing $f_n$ is $2^n$ times the smallest configurable subcarrier spacing $f_0$ with non-negative integer $n$,

k) the first subcarrier of said subcarrier spacing $f_n$ is shifted by an offset value with respect to the first subcarrier of subcarrier spacing $f_0$, and l) said offset value is dependent on $n$.

10. The apparatus for transmitting a multicarrier signal, further comprising a module for performing the steps as defined in one of claims 2 to 8.

11. A multicarrier signal to be transmitted over a frequency resource, wherein

f) said frequency resource is divided into a plurality of resource blocks,
g) said resource block comprises of a number of subcarriers that are equally spaced by a subcarrier spacing,
h) said number of subcarriers or said subcarrier spacing is configurable per said resource block or per a contiguous set of resource blocks,
i) said subcarrier spacing $f_n$ is $2^n$ times the smallest configurable subcarrier spacing $f_0$ with non-negative integer n,
j) the first subcarrier of said subcarrier spacing $f_n$ is shifted by an offset value with respect to the first subcarrier of subcarrier spacing $f_0$, and

said offset value is dependent on $n$.

Fig.1

Fig. 2

| RB partition with $8f_0$ | RB1 | | | | | | | | RB2 | | | | | | | | |
|---|---|---|---|---|---|---|---|---|---|---|---|---|---|---|---|---|---|
| RB partition with $4f_0$ | RB1 | | | | RB2 | | | | RB3 | | | | RB4 | | | | |
| RB partition with $2f_0$ | RB1 | | RB1 | | RB2 | | RB4 | | RB5 | | RB6 | | RB7 | | RB8 | | ... |
| RB partition with $f_0$ | RB1 | RB2 | RB3 | RB4 | RB5 | RB6 | RB7 | RB8 | RB9 | RB10 | RB11 | RB12 | RB13 | RB14 | RB15 | RB16 | |

frequency

Fig. 3

RB partition with 8 $f_0$

RB partition with 4 $f_0$

RB partition with 2 $f_0$

RB partition with $f_0$

| RB1 |
|---|

| RB1 | RB2 |
|---|---|

| RB1 | RB2 | RB3 | RB4 |
|---|---|---|---|

| RB1 | RB2 | RB3 | RB4 | RB5 | RB6 | RB7 | RB8 |
|---|---|---|---|---|---|---|---|

frequency

A

RB1

Fig. 4

RB partition with 8 $f_0$

RB partition with 4 $f_0$

RB partition with 2 $f_0$

RB partition with $f_0$

frequency

Fig. 5

RB partition with 8 $f_0$

RB partition with 4 $f_0$

RB partition with 2 $f_0$

RB partition with $f_0$

frequency

Fig. 6

↑ no offset for all RB partitionings

● SC center frequency

frequency

Fig. 7

offset: $(8f_0 - f_0)/2 = 3.5f_0$

RB1 $(8f_0)$

$f_3$:

offset: $(4f_0 - f_0)/2 = 1.5f_0$

RB1 $(4f_0)$

$f_2$:

offset: $(2f_0 - f_0)/2 = 0.5 f_0$

RB1 $(2f_0)$     RB2 $(2f_0)$

$f_1$:

offset: $(f_0 - f_0)/2 = 0$

RB1 $(f_0)$    RB2 $(f_0)$    RB3 $(f_0)$    RB4 $(f_0)$

$f_0$:

frequency

$(f_n - f_0)/2$ offset for all RB partitionings

● SC center frequency

## Fig. 8

offset: $8f_0 / 2 = 4f_0$

RB1 ($8f_0$)

$f_3$:

offset: $4f_0 / 2 = 2f_0$

RB1 ($4f_0$)

$f_2$:

offset: $2f_0 / 2 = f_0$

RB1 ($2f_0$)   RB2 ($2f_0$)

$f_1$:

RB1 ($f_0$)   RB2 ($f_0$)   RB3 ($f_0$)   RB4 ($f_0$)

$f_0$:

frequency

$f_n / 2$ offset for RB partitionings $n > 0$

● SC center frequency

EP 3 300 324 A1

## Fig. 9

offset: $8f_0 / 2 - f_0 = 3f_0$

RB1 $(8f_0)$

$f_3$:

offset: $4f_0 / 2 - f_0 = f_0$

RB1 $(4f_0)$

$f_2$:

offset: $2f_0 / 2 - f_0 = 0$

RB1 $(2f_0)$ — RB2 $(2f_0)$

$f_1$:

RB1 $(f_0)$ — RB2 $(f_0)$ — RB3 $(f_0)$ — RB4 $(f_0)$

$f_0$:

frequency

$f_n/2 - f_0$ offset for RB partitionings n > 0

● SC center frequency

Fig. 10

offset: $(8f_0 - f_0)/2 = 3.5f_0$

RB1 $(8f_0)$

$f_3$:

offset: $(4f_0 - f_0)/2 = 1.5f_0$

RB1 $(4f_0)$

$f_2$:

offset: $(2f_0 - f_0)/2 = 0.5f_0$

RB1 $(2f_0)$　　　RB2 $(2f_0)$

$f_1$:

offset: $f_0/2 = 0.5f_0$

RB1 $(f_0)$　　RB2 $(f_0)$　　RB3 $(f_0)$　　RB4 $(f_0)$

$f_0$:

frequency

$(f_n - f_0)/2$ offset for all RB partitionings $n > 0$ and $f_0/2$ offset for $n = 0$

● SC center frequency

Fig. 11

Nested mapping of subcarrier center frequencies (Example of $f_0$=15 kHz)

Fig. 12

offset: 2f$_0$

RB1 (4f$_0$)

f$_2$:

RB1 (2f$_0$)    RB2 (2f$_0$)

f$_1$:

RB1 (f$_0$)    RB2 (f$_0$)    RB3 (f$_0$)    RB4 (f$_0$)

f$_0$:

frequency

2f$_0$ offset for f$_2$

● SC center frequency

Fig. 13

$f_0$ offset for RB partitionings n > 0

● SC center frequency

Fig. 14

2f$_0$ offset (for RB partitionings SC center distance > 2f$_0$)

● SC center frequency

Fig. 15

mirror offset: $5f_0$

$f_3$: RB1 ($8f_0$)

$f_0$: RB6 ($f_0$) | RB7 ($f_0$) | RB8 ($f_0$)

frequency

$2f_0$ offset (for RB partitionings SC center distance > $2f_0$)

● SC center frequency

Fig. 16

offset: 4f₀

RB1 (8f₀)

$f_3$:

mirror offset: 3f₀

RB1 (4f₀)

$f_2$:

mirror offset: f₀

RB1 (2f₀)          RB2 (2f₀)

$f_1$:

RB1 (f₀)     RB2 (f₀)     RB3 (f₀)     RB4 (f₀)

$f_0$:

frequency

$4f_0$ offset (for RB partitionings SC center distance $> 4f_0$)

● SC center frequency

Fig. 17

Offset according to mirror of scenario in Fig. 14 and 15

● SC center frequency

Fig. 18

Offset according to mirror of scenario in Fig. 16

● SC center frequency

Fig. 19

## Fig. 20

k = 0, 1, 2 ...   discrete freq. domain index
of the reference numerology
(e.g. SC spacing of $f_0$=15 kHz)

frequency

shadings for different values of offset $g_n$ :

- $g_n$=0
- $g_n$=1
- $g_n$=2
- $g_n$=3

● center frequency of active SCs

**Europäisches Patentamt**
**European Patent Office**
**Office européen des brevets**

# EUROPEAN SEARCH REPORT

**Application Number**

EP 16 19 0380

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | QUALCOMM INCORPORATED: "Specification impact of OFDM filtering-windowing", 3GPP DRAFT; R1-166350, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Gothenburg, Sweden; 20160822 - 20160826 13 August 2016 (2016-08-13), XP051142339, Retrieved from the Internet: URL:http://www.3gpp.org/ftp/tsg_ran/WG1_RL 1/TSGR1_86/Docs/ [retrieved on 2016-08-13] | 1-3,9-11 | INV. H04L27/26 |
| A | * the whole document * | 4-8 | |

-----

**TECHNICAL FIELDS SEARCHED (IPC)**

H04L

The present search report has been drawn up for all claims

| Place of search | Date of completion of the search | Examiner |
|---|---|---|
| Berlin | 4 April 2017 | Douglas, Ian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)